# EUROPEAN PATENT SPECIFICATION

(11) **EP 2 583 427 B1**
(45) Date of publication and mention of the grant of the patent: **01.06.2016**
(21) Application number: 10795078.4
(22) Date of filing: 10.11.2010
(51) Int. Cl.: H04L 29/06, H04L 29/08, H04L 29/12

(54) **METHOD AND APPARATUS FOR HANDLING PUBLIC IDENTITIES IN AN INTERNET PROTOCOL MULTIMEDIA SUBSYSTEM NETWORK**
VERFAHREN UND VORRICHTUNG ZUR HANDHABUNG VON ÖFFENTLICHEN IDENTITÄTEN IN EINEM IP-MULTIMEDIA-SUBSYSTEM
PROCÉDÉ ET APPAREIL PERMETTANT DE TRAITER DES IDENTITÉS PUBLIQUES DANS UN RÉSEAU DE SOUS-SYSTÈME MULTIMÉDIA À PROTOCOLE INTERNET

(30) Priority: 18.06.2010 US 356098 P
(43) Date of publication of application: 24.04.2013
(73) Proprietor: Telefonaktiebolaget LM Ericsson (publ), 164 83 Stockholm (SE)
(72) Inventor: ALMARAZ VALDES, Luis Miguel, E-28260 Galapagar (Madrid) (ES); BERLANGA IZQUIERDO, Julia, E-28821 Coslada (ES); ESTEBAN VARES, Nuria, E-28300 Aranjuez (Madrid) (ES); GUERRA, Maria Ruth, S-113 38 Stockholm (SE); MAROTO GIL, Beatriz, E-28222 Majadahonda Madrid (ES); MERINO VAZQUEZ, Emiliano, E-28916 Leganés (Madrid) (ES)
(74) Representative: Ericsson
(86) International application number: PCT/SE2010/051232
(87) International publication number: WO 2011/159214

(56) References cited:
- EP-A1- 2 106 091
- 3GPP TSG CT4, ERICSSON: "Wildcarded Identities handling in IMS", 3GPP C4-101633, 18 June 2010 (2010-06-18), pages 1-6, XP002628571, Dublin, Ireland Retrieved from the Internet: URL:http://www.3gpp.org/ftp/tsg_ct/WG4_pro tocollars_ex-CN4/TSGCT4_49bis_Dublin/Docs/ C4-101633.zip [retrieved on 2011-03-11]
- CAMARILLO G BLANCO ERICSSON G: "The Session Initiation Protocol (SIP) P-Profile-Key Private Header (P-Header); rfc5002.txt", IETF STANDARD, INTERNET ENGINEERING TASK FORCE, IETF, CH, 1 August 2007 (2007-08-01), XP015055074, ISSN: 0000-0003

## Description

### TECHNICAL FIELD

The present invention relates to methods and apparatuses for handling public identities in an Internet Protocol Multimedia Subsystem (IMS) network and in particular to methods and apparatuses for handling wildcarded public identities.

### BACKGROUND

With the emergence of new technologies for mobile telephony, packet-based communication solutions using Internet Protocol (IP) have been developed to support the usage of multimedia services, while different mobile and fixed user terminals with new functionalities for multimedia communication are emerging on the market. Services are also constantly being developed for terminal users to increase the field of usage and enhance the experience when generally consuming communication services.

An IP Multimedia Subsystem (IMS) network can be used for enabling multimedia services and other communication services by initiating and controlling sessions for user terminals connected to various different access networks. The sessions are handled by specific session control nodes in the IMS network, including those referred to as Call Session Control Function (CSCF) nodes.

The signaling protocol Session Initiation Protocol (SIP) is used for multimedia sessions in IMS networks and other communication services networks.

Various identities may be associated with IMS, such as private user identities, IP Multimedia Private Identity (IMPI) and public user identities, IP Multimedia Public Identity (IMPU). Both IMPI and IMPU are Uniform Resource Identifiers (URIs) that can be digits (a Tel URI, like tel:+1-555-123-4567) or alphanumeric identifiers (a SIP URI, like sip:john.doe@example.com). IMS identities are stored in a subscriber database, hereinafter referred to as a Home Subscriber Server (HSS) together with subscriber service profiles, service triggers and other information.

The IMPI is a unique permanently allocated global identity assigned by the home network operator, and is used, for example, for Registration, Authorization, Administration and Accounting purposes. Every IMS user shall have one or more IMPI.

The IMPU is used by any user for requesting communications with other users. The IMPU can be published (e.g. in phone books, web pages, business cards). There can be multiple IMPU per IMPI. The IMPU can also be shared between several terminals, so that several terminals can be reached with the same identity (for example, a single phone-number for an entire family).

IMPUs may be stored in the HSS as Wildcarded Public User Identities (wiMPUs). The wIMPU represents a collection of IMPUs that share the same service profile and are included in the same Implicit Registration Set (IRS). An IRS is a group of IMPUs that are registered via a single registration request. When one of the IMPUs within the set is registered, all IMPUs associated with the IRS are registered at the same time. wIMPUs include a regular expression (reg exp) that defines the identities that should be matched and handled as defined for the wIMPU.

A Public Service Identity (PSI) identifies a service, or a specific resource created for a service on an Application Server (AS). The PSI is stored in the HSS either as a distinct PSI or as a wildcarded PSI. The distinct PSI contains the PSI that is used in routing, whilst the wildcarded PSI represents a collection of PSIs. The format of the wPSI is the same as for the wIMPU.

The handling of wildcarded identities, i.e. wPSIs and wIMPUs, was specified in the Third Generation Project Partnership (3GPP) Release 7 and 8 respectively, see for instance 3^{rd} Generation Partnership Project (3GPP) TS 23.003. wIMPU has been included in the standards to support Private Branch Exchanges (PBX) where thousands of numbers can be registered from one single identity. Implicit registration is not applicable as downloading thousands of implicit identities registered to the rest of the system is not an option (the message would be too long).

There has therefore been a need for the wIMPU which is associated with a group of IMPUs sharing the same service profile and requiring a single explicit registration to provide services to all the identities behind a PBX. The following conditions are applicable for the wIPMU:
- The subscription under a wIMPU will be handled by the same Serving CSCF (S-CSCF) in the situation of routing towards the core or by the same PBX in the situation of routing in the interface (Gm) between a user terminal, hereinafter called a User Equipment (UE), and the IMS network, so that no further checking is needed.
- No individual authentication of the IMPUs within a wIPMU is performed.
- No individual service profile is provisioned anywhere in the network for the distinct IMPUs within a wIMPU.
- There is no interface (Ut) between UEs and Applications Servers (AS) available for individual IMPUs included within a wIMPU as they will all have only one authentication information.
- There is no individual service setting provisioned anywhere in the network for the distinct IMPUs within a wIMPU. Standards state that an AS can only store service data on the wIMPU, that is, only one set of transparent data for the whole wIMPU.
- All the users within the number range of a wIMPU should belong to the same IRS, therefore they need to belong to the same subscription.
- All the wIMPUs and the distinct IMPUs within the wIMPU from one subscription should be provisioned in the same HSS.

There are thus certain limitations in terms of services and profiles applicable for the distinct IMPUs within the wIMPU. In specific cases it might therefore be desired to assign a different service profile for a distinct IMPU within a wIMPU. As an example, the president of a company, even though having a phone number from the same range as the rest of the company, could be assigned a different service profile. Consequently the different service profile assigned to the president would need to be provisioned in the HSS (so it should be a distinct IMPU). It could also be desired that the president could use his UE to receive calls to/from his company's phone number. Accordingly, it should be allowed to register independently from the PBX to prevent forking for all terminating calls. Note that, although the discussion above relates to IMPU/wIMPU, the same principles applies for PSI/wPSI, that is, it might be desired to assign a different service profile for a distinct PSI within a wPSI. The above described desired special treatment of distinct identities within a wildcarded identity is not completely supported in the present standards. There is therefore a need for solutions that provide better support for such situations.

A method of setting up a call from an originating user in an IMS network is disclosed in EP 2106091 A1. EP 2106091 A1 further discloses the handling of messages comprising public and wildcarded identities, where the wildcarded public identity is used to fetch a service profile associated with the wildcarded public identity.

The document "The Session Initiation Protocol (SIP) P-Profile-Key Private Header (P-Header); rfc5002.txt" by Camarillo G and Blanco Ericsson G discloses a SIP P-Profile-Key P-header that is used in IMS to provide SIP registrars and SIP proxy servers with the key of the profile corresponding to the destination SIP URI of a particular SIP request.

### SUMMARY

It is an object of the invention to provide a method according to claim 1 and apparatus according to claim 10 for handling public identities in an Internet protocol Multimedia Subsystem (IMS) network, which at least partly overcome some of the above mentioned limitations and challenges associated with supporting wildcarded public identities. This object is achieved by means of a method and an apparatus according to the attached independent claims.

According to different aspects, methods and apparatuses are provided for handling public identities in an IMS network.

According to one aspect, a method in a Serving Call Session Control Function (S-CSCF) node is provided for handling public identities in an IMS network. The S-CSCF node receives a message including a public identity. The message is received from an Interrogating CSCF (I-CSCF). If the message does include a profile key with a wildcarded identity, the S-CSCF uses the wildcarded identity received with the profile key to fetch a user/service profile related to the wildcarded identity. If the message does not include a profile key with a wildcarded identity, the S-CSCF uses the public identity received in the message to fetch a user/service profile related to the public identity.

Furthermore, according to another aspect, an S-CSCF node is provided for handling public identities in an IMS network. The S-CSCF node is configured to receive a message including a public identity. The S-CSCF node is further configured to, if the message includes a profile key with a wildcarded public identity, use the wildcarded public identity received with the profile key to fetch a user/service profile associated with the wildcarded public identity. If the message does not include a profile key with a wildcarded public identity, the S-CSCF node is configured to use the public identity received in the message to fetch the user/service profile associated with the public identity.

The S-CSCF node comprises a receiver, a transmitter, a memory unit and processing logic. The processing logic is connected to the receiver, to the transmitter and to the memory unit. The receiver is configured to receive said message. The processing logic comprises retrieving logic, which is configured to fetch said user/service profile.

The retrieving logic may further optionally be configured to fetch said user/service profile from said memory unit or send a request to a Home Subscriber Server (HSS) in order to fetch said user/service profile.

Further features and benefits of embodiments of the invention will become apparent from the detailed description below.

### BRIEF DESCRIPTION OF THE DRAWINGS

The invention will now be described in more detail by means of exemplary embodiments and with reference to the accompanying drawings, in which:
Figure 1 is a block diagram schematically illustrating a telecommunications system in which embodiments of the invention may be implemented;
Figure 2 is a signaling diagram schematically illustrating handling of public identities in an Internet Protocol Multimedia Subsystem (IMS) network, in accordance with the prior art;
Figure 3 is a signaling diagram schematically illustrating handling of public identities in an IMS network;
Figure 4 is a signaling diagram schematically illustrating handling of public identities in an IMS network, in accordance with an embodiment of the invention;
Figure 5 is a flow chart schematically illustrating embodiments of the invention;
Figure 6 is a flow chart schematically illustrating a method for handling public identities in an IMS network, in accordance with an embodiment of the invention;
Figure 7 is a block diagram schematically illustrating a Serving Call Session Control Function (S-CSCF) node, in accordance with an embodiment of the invention.

### DETAILED DESCRIPTION

The present invention will now be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. In the drawings, like reference signs refer to like elements.

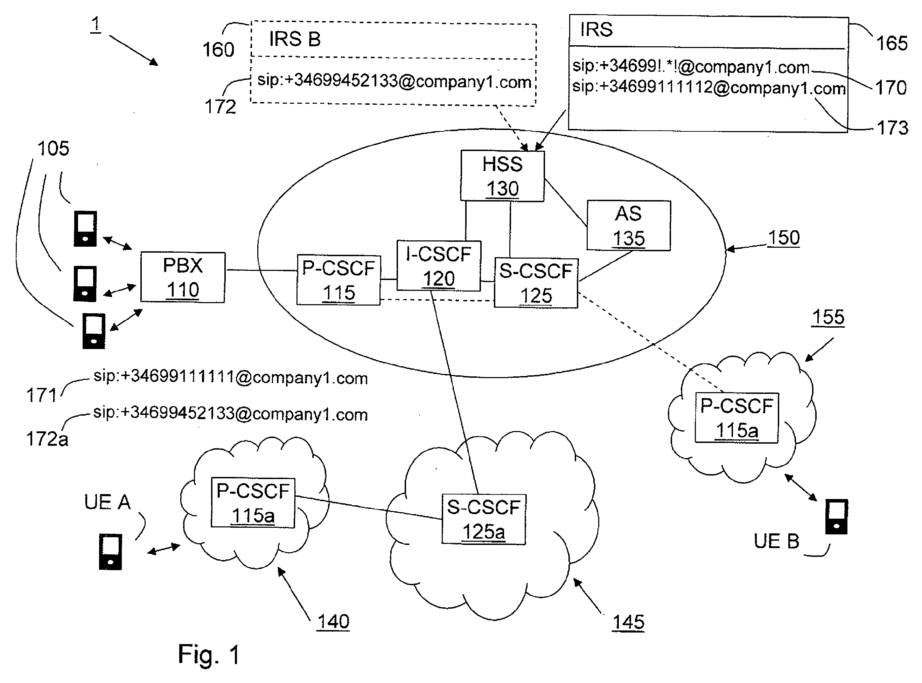

Figure 1 illustrates an exemplary telecommunications system 1 in which embodiments of the present invention may be implemented. The telecommunications system 1 includes an Internet protocol Multimedia Subsystem (IMS) network 150 serving a Private Branch Exchange (PBX) 110. The PBX 110 can, in turn, serve thousands of User Equipments (UE), illustrated by the UEs 105 in Fig.1. In this way, thousands of numbers can be registered from a single identity.

The IMS network 100 comprises various session control nodes, referred to as Call Session Control Function (CSCF) nodes. These CSCF nodes include a Proxy CSCF (P-CSCF) node 115 providing a point of contact for users in the IMS network 150, a Serving CSCF (S-CSCF) node 125 controlling various sessions for users, and an Interrogating CSCF (I-CSCF) node 120 providing an interface towards other IMS networks and which also queries a subscriber database node, hereinafter referred to as a Home Subscriber Server (HSS) node 130, for user related information during user registration and termination. The interface between the HSS 130 and either the I-CSCF 120 or the S-CSCF 125 is specified in the standards as a Cx interface. Hereinafter only the Cx interface is referred to, but those skilled in the art understands that the description applies in a similar manner to a Dx interface and a Subscription Locator Function (SLF) node, not shown, in situations when there are more than a single HSS 130 in the IMS network 150. The HSS 130 stores subscriber and authentication data which can be retrieved by other nodes for serving and handling different users. The HSS 130 may also store one or more Implicit Registration Set (IRS), 160, 165, which will be explained more in detail below.

The IMS network 150 also comprises a number of Application Server (AS) nodes configured to provide different communication services when invoked to meet service requests for clients. For the sake of simplicity only one AS node 135 is shown in Fig. 1. Each AS 135 may be configured to provide a specific service or a particular set of services. The AS 135 is linked to the session control signaling over an interface to the S-CSCF node 125.

The telecommunications system 1 further includes other IMS networks, 140, 145 and 155, all of which will be further explained below.

Let us assume that the PBX 110 is associated with a company and that one of the UEs 105 is associated with a first public identity 171, sip:+34699111111@company1.com, and that one other of the UEs 105 is associated with a second public identity 172a, sip:+34699452133@company1.com. Neither of the first public identity 171 and the second public identity 172a is provisioned in the HSS 130, but falls within a range of a wildcarded public identity 170, sip+34699!.*!@company1.com, which is provisioned in the HSS 130. The wildcarded public identity 170 is associated with the IRS 165. A third public identity 173 is also associated with the IRS 165. The third public identity 173 illustrates a public identity that also falls within the range of the wildcarded public identity but which is provisioned in the HSS 130, in contrast to the first public identity 171 and the second public identity 172a which are not provisioned in the HSS 130.

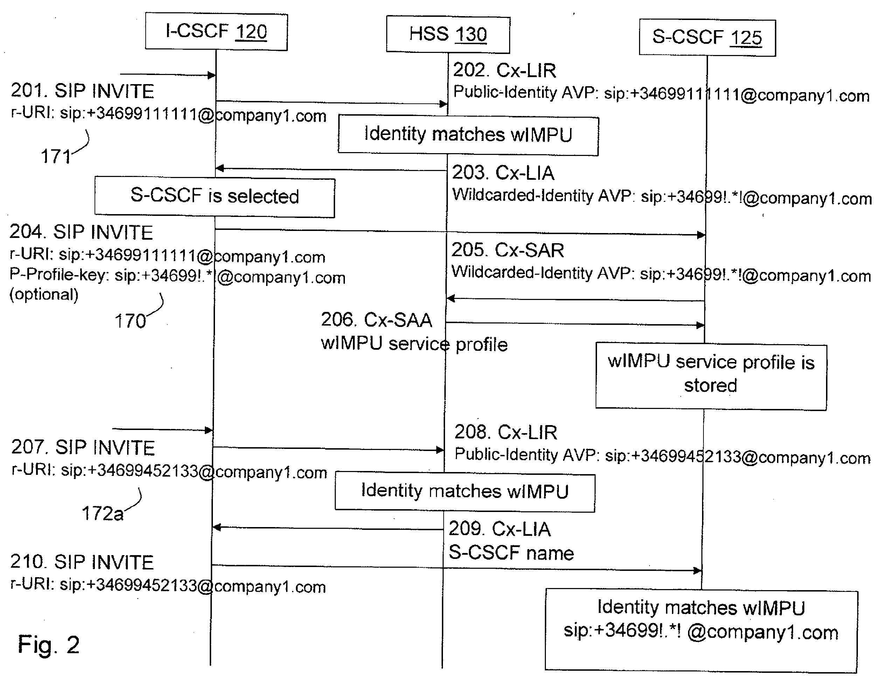

Now assume that neither of the first public identity 171 and the second public identity 172a is registered and someone, represented by a UE A, wants to send a first request to the first public identity 171, and a second request to the second public identity 172a. Note that the first and the second requests do not necessarily both need to be initiated by the UE A. Fig. 1 illustrates a scenario when the UE A is roaming, i.e. the requests are sent via a P-CSCF 115a in a visited IMS network 140 of UE A, via an S-CSCF 125a in a home IMS network 145 of UE A to the I-CSCF 120 in the home IMS network 150 of the PBX 110. In other words, the requests are terminating in the IMS network 150, which is the home IMS network of the first public identity 171 and the second public identity 172a. Exemplary signaling scenarios related this situation of terminating requests will now be explained and compared in connection with Figures 2-4 to provide an understanding of some of the merits of embodiments of the invention.

Figure 2 is a signaling diagram schematically illustrating the traffic flows for a first terminating request related to the first public identity 171 within the wildcarded public identity 170, and a second terminating request related to the second public identity 172a, within the wildcarded public identity 170, as defined in standards today.

Signals and steps indicated by reference numerals 201-210 respectively in Fig. 2 are explained below.

201: A first Session Initiation Protocol (SIP) INVITE request message is received at the I-CSCF 120. The message includes, in a Request-URI (r-URI), the first public identity 171, which in this example is a IMPU, sip:+34699111111@company1.com.

202: The I-CSCF 120 sends a DIAMETER Location-Info-Request (LIR) message to obtain either the name of the S-CSCF that is serving the first public identity 171 or to obtain the required S-CSCF capabilities for being able to perform an S-CSCF selection. The message includes, in a Public-Identity Attribute-Value-Pair (AVP), the first public identity 171.

203: The HSS 130 uses the received first public identity 171 to perform wildcarded/reg exp matching and finds that the first public identity 171 matches a wildcarded public identity 170, in this example a wIMPU, sip:+34699!.*@company1.com. Note that since the first public identity 171 is not provisioned in the HSS, it can not be identified through the first public identity 171 (sip:+34699111111@company1.com), but since it falls within the range of a wildcarded identity 170, it can be identified through the wildcarded identity 170 (sip:+34699!.*!@company1.com).

The HSS 130 responds to the I-CSCF 120 with a DIAMETER Location-Info-Answer (LIA) message. The message includes, in a Wildcarded-Identity AVP, the wildcarded public identity 170. The message also includes the requested S-CSCF capabilities for the wildcarded public identity 170, if the HSS 130 has no knowledge of which S-CSCF that is serving the wildcarded public identity 170. The I-CSCF 120 selects the S-CSCF 125 based on the received S-CSCF capabilities.

204: The I-CSCF 120 forwards the message to the S-CSCF 125. The message includes, in the r-URI, the first public identity 171. The I-CSCF 120 may, depending on implementation, also include, in an optional P-Profile-key, the wildcarded public identity 170.

205: The S-CSCF 125 uses the first public identity 171, received in the r-URI of the message, to perform wildcarded/reg exp matching. The S-CSCF 125 does not find a match for the first public identity 171 itself, but finds a match for the first public identity 171 as falling within the range of a wildcarded public identity 170. If no stored user/service profile matches with the wildcarded public identity 170, the S-CSCF 125 will send a request to the HSS 130, using the wildcarded public identity 170, to fetch/download the user/service profile associated with the wildcarded public identity 170. The request is a DIAMETER Server-Assignment-Request (SAR). The message includes, in a Wildcarded-Identity AVP, the wildcarded public identity 170. The message also updates the HSS 130 with the S-CSCF 125 name.

206: The HSS 130 may use the wildcarded public identity 170, received in the Wildcarded-Identity AVP, to retrieve the user/service profile associated with the wildcarded public identity 170. The user/service profile is sent to the S-CSCF 125 in a DIAMETER Server-Assignment-Response (SAA). The S-CSCF 125 stores the received user/service profile associated with the wildcarded public identity 170. Accordingly the user/service profile associated with the wildcarded public identity 170 will be applied for the first public identity 171.

207: A second SIP INVITE request message is received at the I-CSCF 120. The message includes, in the r-URI, the second public identity 172a, which in this example is a IMPU, sip:+34699452133@company1.com.

208: The I-CSCF 120 sends a DIAMETER LIR message to obtain either the name of the S-CSCF that is serving the second public identity 172a or to obtain the required S-CSCF capabilities for being able to perform an S-CSCF selection. The message includes, in a Public-Identity AVP, the second public identity 172a.

209: The HSS 130 uses the received second public identity 172a to perform wildcarded/reg exp matching and finds that the second public identity 172a matches the wildcarded public identity 170, in this example the wIMPU, sip:+34699!.*!@company1.com. Note that, corresponding to the situation described in step 203, since the second public identity 172a is not provisioned in the HSS 130, it can not be identified through the second public identity 172a itself (sip:+34699452133@company1.com), but since it falls within the range of a wildcarded identity 170, it can be identified through the wildcarded identity 170 (sip:+34699!.*!@company1.com).

The HSS 130 responds to the I-CSCF 120 with a DIAMETER LIA message. The message includes the name of the S-CSCF that is serving the wildcarded public identity 170, i.e. S-CSCF 125. The message includes, as in step 203, in a Wildcarded-Identity AVP, not shown, the wildcarded public identity. Since the HSS 130 was updated with the S-CSCF name in step 205, the HSS 130 now knows that the S-SCSF 125 is serving the wildcarded public identity 170.

In this way the I-CSCF 120 now knows that the SIP INVITE message should be forwarded to the S-CSCF 125.

210: The I-CSCF 120 forwards the message to the S-CSCF 125. The message includes, in the r-URI, the second public identity 172a.

The S-CSCF 125 uses the second public identity 172a, received in the r-URI of the message, to perform wildcarded/reg exp matching. The S-CSCF 125 does not find a match for the second public identity 172a itself, but finds a match for the second public identity 172a as falling within the range of a wildcarded public identity 170. Since the user/service profile associated with the wildcarded public identity 170 has been previously stored at the S-CSCF 125 (in step 206), the stored user/service profile associated with the wildcarded public identity 170 will be applied for the second public identity 172a.

As described in Fig. 2, step 205 the S-CSCF 125 uses the first public identity 171 received in the first request to perform wildcarded/reg exp matching. The S-CSCF 125 then fetches the user/service profile associated with the wildcarded public identity 170, from the HSS 130. In step 210 the S-CSCF 125 uses the second public identity 172a received in the second request to perform wildcarded/reg exp matching. The S-CSCF 125 then fetches the user/service profile associated with the wildcarded public identity 170, from its own memory since the user/service profile associated with the wildcarded public identity 170 was stored at the S-SCSF 125 in step 206.

Consequently, as defined in the standards today, when neither of the first public identity 171 and the second public identity 172a is provisioned in the HSS 130, but falls within the range of the wildcarded public identity 170, which is provisioned in the HSS 130, the user/service profile associated with the wildcarded public identity 170 will be applied for both the first public identity 171 and the second public identity 172a.

Let us again assume that the PBX 110 is associated with the same company as above and that one of the UEs 105 is associated with the first public identity 171, sip:+34699111111@company1.com, and that one other of the UEs 105 is associated with the second public identity 172a, sip:+34699452133@company1.com, as before. Let us now assume that the president of the company is represented by the second public identity 172a. Let us further assume that it is desired, for reasons discussed above, to assign to the president a user/service profile that is different from the user/service profile assigned to the wildcarded public identity 170. That is, it is desired to provide different services or service degree to the president than to the other employees. Accordingly, the second public identity 172a would need to be provisioned in the HSS 130, i.e. the second public identity would be a distinct public identity. An existing requirement in the standards is that the matching of distinct identities shall take precedence over the matching of wildcarded identities. That is, if a public identity is provisioned in an HSS as a distinct public identity, and if the public identity falls into the range of a wildcarded public identity that also is provisioned in the HSS, then the HSS will match the public identity with the distinct pubic identity. An other existing requirement in the standards is that all the distinct identities within the range of a wildcarded identity should be included in the same IRS. However, the latter requirement limits the possibility of registering independently from a different contact, since all the identities within the wildcarded identity must be registered and de-registered at the same time. Further it also limits the amount of "special numbers" that can be included in the range of the wildcarded identity as there is a limit in the number of identities that can be transported in the different fields (P-Associated URI).

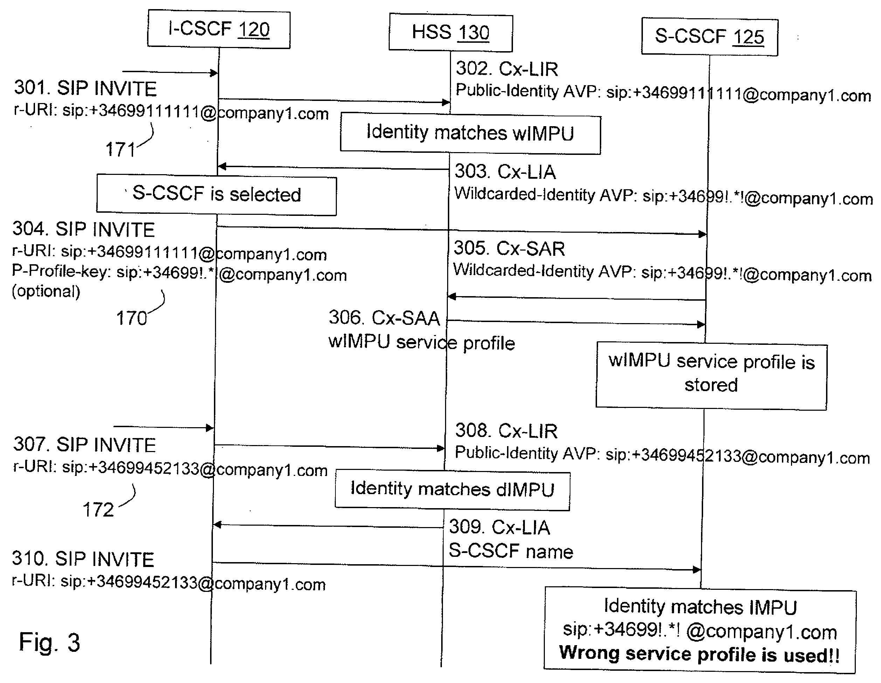

Therefore the inventors have foreseen a need to remove the limitation of having to include all the public identities within the range of a wildcarded public identity within the same IRS. However, if all the public identities within the range of a wildcarded public identity are not included in the same IRS, a problem might occur on terminating call scenarios. This problem will be further discussed below in connection with Figure 3.

Fig. 3 is a signaling diagram corresponding to the one illustrated in Fig. 2 but differing in that the second request is related to a provisioned public identity 172 which is included in a different IRS B 160 than the IRS 165 in which the wildcarded public identity 170 is included. As discussed above, the reason why the second public identity 172 (which is assumed to be associated with the president) is included in the IRS B 160 is that it is desired that the president should have a service profile that is different from the service profile associated with the other employees without having to be registered and de-registered at the same time as all the other identities within the wildcarded identity.

Signals and steps indicated by reference numerals 301-310 respectively in Fig. 3 are explained below.

The steps 301-306 relate to the first request and correspond to the steps 201-206 described in connection with Fig. 2 above. Steps 301-306 will therefore not be explained in further detail.

Now let us look at the second request destined to the second public identity 172, i.e. to the president. Let us assume that the president, represented by the second public identity 172 has an UE B that is roaming in a visited IMS network 155.

307: A second SIP INVITE request message is received at the I-CSCF 120. The message includes, in the r-URI, the second public identity 172, which in this example is a IMPU, sip:+34699452133@company1.com. This step corresponds to step 207, but now the second public identity 172 is provisioned in the HSS 130 and represents the president as discussed above.

308: The I-CSCF 120 sends a DIAMETER LIR message to obtain either the name of the S-CSCF that is serving the second public identity 172 or to obtain the required S-CSCF capabilities for being able to perform an S-CSCF selection. The message includes, in a Public-Identity AVP, the second public identity 172. This step corresponds to step 208, but now the second public identity 172 is provisioned in the HSS 130 and represents the president as discussed above.

309: The HSS 130 uses the received second public identity 172 to perform wildcarded/reg exp matching. Note that, contrarily to the situation described in step 209, since the second public identity 172 is now provisioned in the HSS 130, it is identified through the second public identity 172 (sip:+34699452133@company1.com), even though it falls within the range of a wildcarded identity 170 (sip:+34699!.*!@company1.com). As discussed above the matching of distinct identities take precedence over the matching of wildcarded identities. Consequently, the result of the wildcarded/reg exp matching is that the HSS 130 finds that the second public identity 172 matches a distinct public identity, i.e. the second public identity 172 itself, in this example the dIMPU, sip:+34699452133@company1.com.

The HSS 130 responds to the I-CSCF 120 with a DIAMETER LIA message. The message includes the name of the S-CSCF that is serving the second public identity 172, which is the same S-CSCF that is serving the wildcarded public identity 170, i.e. S-CSCF 125.

In this way the I-CSCF 120 now knows that the SIP INVITE message should be forwarded to the S-CSCF 125.

310: The I-CSCF 120 forwards the message to the S-CSCF 125. The message includes, in the r-URI, the second public identity 172. The S-CSCF 125 uses the second public identity 172, received in the r-URI of the message, to perform wildcarded/reg exp matching. The S-CSCF 125 does not find a match for the second public identity 172 itself, but finds a match for the second public identity 172 as falling within the range of a wildcarded public identity 170. Since the user/service profile associated with the wildcarded public identity 170 has been previously stored at the S-CSCF 125 (in step 306), the stored user/service profile associated with the wildcarded public identity 170 will be applied for the second public identity 172. Note that the S-CSCF 125 has no knowledge about the fact that the second public identity 172 is now provisioned in the HSS 130, since the second public identity 172 is not previously registered. Consequently an incorrect service profile will be applied for the second public identity 172, i.e. for the president.

Also note that the S-CSCF 125 will route the request to the UE B via the PBX 110, and not via the visited network 155 of the UE B.

As described in Fig. 3, step 305 the S-CSCF 125 uses the first public identity 171 received in the first request to perform wildcarded/reg exp matching. The S-CSCF 125 then fetches the user/service profile associated with the wildcarded public identity 170, from the HSS 130. In step 310 the S-CSCF 125 uses the second public identity 172 received in the second request to perform wildcarded/reg exp matching. The S-CSCF 125 then fetches the user/service profile associated with the wildcarded public identity 170, from its own memory since the user/service profile associated with the wildcarded public identity 170 was stored at the S-SCSF 125 in step 206.

Consequently, as defined in the standards today, when the first public identity 171 is not provisioned and the second public identity 172 (associated with the president) is provisioned, and both falls within the range of the provisioned wildcarded public identity 170, the user/service profile associated with the wildcarded public identity 170 will be applied for both the first public identity 171 and the second public identity 172. Note that the S-CSCF 125 has no knowledge about the fact that the second public identity 172 is now provisioned in the HSS 130, since the second public identity 172 is not previously registered. Thus an incorrect service profile will be applied for the second public identity 172, i.e. for the president.

Note that although the example with the president and the company above relates to IMPUs/wIMPUs, the same principles applies for PSIs/wPSIs, as discussed earlier.

Briefly described, embodiments of the present invention provide a solution for handling public identities in an IMS network, which in particular increases the flexibility of the handling of wildcarded public identities. Embodiments of the invention provide mechanisms for reliable handling of public identities falling within the range of a wildcarded public identity.

According to embodiments of the invention procedures in the Cx interface is enhanced/added such that the profile key 421 is made mandatory and can thus be trusted as a flag indicating whether a request received at the S-CSCF 125 is related to a wildcarded public identity or not. The S-CSCF 125 shall not perform wildcarded/reg exp matching, but rely on the HSS 130 for the handling of the wildcarded information. In this way the situation described in connection with step 310 in Fig. 3 will be avoided, i.e. it will be ensured that a correct user/service profile is used.

According to certain embodiments of the invention the public identities are public user identities, IMPUs or public service identities, PSIs.

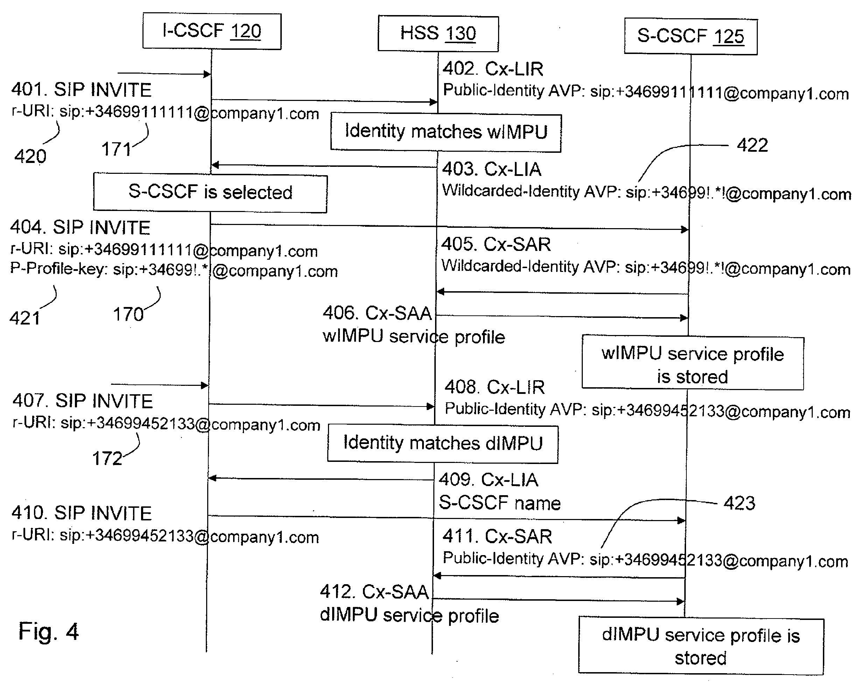

A procedure for handling public identities in an IMS network 100, on a terminating side of a call, in accordance with an exemplary embodiment of the invention, will now be described with reference to the signaling diagram shown in Figure 4.

As described in connection with Fig. 3, we again assume that the second public identity, 172, is provisioned in the HSS 130 and associated with the IRS B 160, as illustrated in Fig.1.

Signals and steps indicated by reference numerals 401-412 respectively in Fig. 4 are explained below.

Steps 401-404 relate to the first request and corresponds to steps 201-204 and 301-304 of Figs. 2 and 3 respectively, with the exception that since the I-CSCF 120 received the wildcarded public identity 170, in step 403, it shall also include the profile key 421 with the wildcarded public identity in the message in step 404. In this example the profile key 421 is a P-Profile-key. Contrary to the situation described in steps 204 (Fig. 2) and 304 (Fig. 3) the I-CSCF will now include the profile key 421 in cases where a wildcarded public identity is to be used, i.e. it is not optional.

405: The S-CSCF 125 uses the wildcarded public identity 170, received with the profile key 421, to fetch/download the user/service profile associated with the wildcarded public identity 170. Note that, contrarily to the situation described in steps 205 (Fig. 2) and 305 (Fig. 3), the S-CSCF 125 will not perform wildcarded/reg exp matching. Instead the S-CSCF 125 will compare if the received message contains a profile key 421 with the wildcarded public identity 170 or not. If it does, the S-CSCF 125 will use the wildcarded public identity 170 to fetch/download the user/service profile associated with the wildcarded public identity 170. The situation when the received message does not contain a profile key 421 with a wildcarded public identity 170 will be described in step 411 below.

If no stored user/service profile associated with the wildcarded public identity 170 is found, the S-CSCF 125 will send a request to the HSS 130, using the wildcarded public identity 170, to fetch/download the user/service profile associated with the wildcarded public identity 170. In this example the request is a DIAMETER SAR. The message includes the wildcarded public identity 170. In this example the wildcarded public identity 170 is included in the Wildcarded-Identity AVP 422. Note that the message also includes the public identity 171, e.g. in a Public-Identity AVP, in addition to the wildcarded public identity 170, but only the Wildcarded-Identity AVP 422 is shown in Fig. 4. The message also updates the HSS 130 with the S-CSCF 125 name.

406: The HSS 130 uses the received wildcarded public identity 170, in this example received in the Wildcarded-Identity AVP 422, to retrieve the user/service profile associated with the wildcarded public identity 170. Note that the public identity 171 (not shown, as discussed above) shall be ignored if a wildcarded public identity 170 is received. The user/service profile is sent to the S-CSCF 125, in this example in a DIAMETER SAA. The S-CSCF 125 stores the received user/service profile associated with the wildcarded public identity 170. Accordingly the user/service profile associated with the wildcarded public identity 170 will be applied for the first public identity 171.

As above, the first public identity 171 is not provisioned in the HSS 130, but falls within the range of a wildcarded public identity 170, in this example sip:+34699!.*!@company1.com, which is provisioned in the HSS 130 and associated with the IRS 165. Consequently, the first public identity 171 is associated with the same user/service profile as the wildcarded public identity 170.

As discussed above in connection with Fig 3. the second public identity 172, representing the president, needs to be provisioned in the HSS 130, in order to be associated with a different user/service profile than the wildcarded public identity 170. The second public identity 172 may be associated with the IRS B 160, but that is not necessary. The second public identity 172 still falls within the range of the wildcarded public identity 170.

Now let us look at the second request destined to the second public identity 172, which is assumed to be associated with the president. Let us again assume that the president has an UE B that is roaming in a visited IMS network 155.

407: A second message is received at the I-CSCF 120. In this example the message is a SIP INVITE request message. The message includes the second public identity 172, which in this example is a IMPU, sip:+34699452133@company1.com. In this example the second public identity 172 is included in the r-URI 420. Corresponding to step 307 (Fig. 3) the second public identity 172 is associated with the president as discussed above.

408: The I-CSCF 120 sends a message, which in this example is a DIAMETER LIR, to obtain either the name of the S-CSCF that is serving the second public identity 172 or to obtain the required S-CSCF capabilities for being able to perform an S-CSCF selection. The message includes the second public identity 172. In this example the second public identity 172 is included in a Public-Identity AVP. Corresponding to step 308 (Fig. 3) the second public identity 172 is associated with the president as discussed above.

409: The HSS 130 uses the received second public identity to perform wildcarded/reg exp matching. Similarly to the situation described in step 309 (Fig. 3), since the second public identity is now provisioned in the HSS, it is identified through the second public identity (sip:+34699452133@company1.com), even though it falls within the range of a wildcarded identity (sip:+34699!.*!@company1.com). As discussed above matching of distinct identities take precedence over the matching of wildcarded identities. Consequently, the result of the wildcarded/reg exp matching is that the HSS 130 finds that the second public identity matches a distinct public identity, i.e. the second public identity itself, in this example the dIMPU, sip:+34699452133@company1.com.

The HSS 130 responds to the I-CSCF 120, in this example with a DIAMETER LIA message. The message includes the name of the S-CSCF that is serving the second public identity 172, which is the same S-CSCF that is serving the wildcarded public identity 170, i.e. S-CSCF 125.

In this way the I-CSCF 120 now knows that the SIP INVITE message should be forwarded to the S-CSCF 125.

410: The I-CSCF 120 forwards the message to the S-CSCF 125. The message includes, in this example in the r-URI 420, the second public identity 172. Since the I-CSCF 120 did not receive a wildcarded public identity 170, in this example a Wildcarded-Identity AVP, in step 409, it shall not include a profile key 421, with the wildcarded public identity 170.

The S-CSCF 125 uses the second public identity 172, in this example received in the r-URI 420 of the message, to fetch/download the user/service profile associated with the second public identity 172. Note that, contrarily to the situation described in steps 210 (Fig. 2) and 310 (Fig. 3), the S-CSCF 125 will not perform wildcarded/reg exp matching. Instead the S-CSCF 125 will compare if the received message contains a profile key 421 with a wildcarded public identity 170 or not. If the received message does contains a profile key 421 with a wildcarded public identity 170, the S-CSCF 125 will use the wildcarded public identity 170 to fetch/download the user/service profile associated with the wildcarded public identity 170, as described in step 405. If the received message does not contain a profile key 421 with a wildcarded public identity 170, the S-SCSF 125 will instead use the second public identity 172, in this example received in the r-URI 420 of the message, to fetch/download the user/service profile associated with the second public identity 172.

411: If no stored user/service profile associated with the second public identity 172 is found, the S-CSCF 125 will send a request to the HSS 130, using the second public identity 172, to fetch/download the user/service profile associated with the second public identity 172. In this example the request is a DIAMETER SAR. The message includes, in this example in a Public-Identity AVP, the second public identity. Note that the message only includes the public identity 172, and not the wildcarded public identity 170. The message also updates the HSS 130 with the S-CSCF 125 name.

412: The HSS 130 uses the received second public identity 172, in this example received in the Public-Identity AVP, to retrieve the user/service profile associated with the second public identity 172. In this example the user/service profile is sent to the S-CSCF 125 in a DIAMETER SAA. The S-CSCF 125 stores the received user/service profile associated with the second public identity 172. Accordingly the user/service profile associated with the second public identity 172 will be applied for the second public identity 172.

Note that, since the S-CSCF 125 does not perform wildcarded/reg exp matching but relies on the information sent from the HSS 130, it does not matter that the S-CSCF 125 has no knowledge about the fact that the second public identity 172 is provisioned in the HSS 130. Consequently the correct service profile will be applied for the second public identity 172, i.e. for the president.

Also note that in this way the S-CSCF 125 will be able to route the request directly to the UE B via a P-CSCF 115a in the visited network 155 of the UE B, thus preventing forking via the PBX 110.

As described in Fig. 4, in step 405 the S-CSCF 125 uses the wildcarded public identity 170 received with the profile key 421 to fetch/download the user/service profile associated with the wildcarded public identity 170. Note that the S-CSCF 125 does not perform wildcarded/reg exp matching, using the first public identity 171, as it did in step 305, Fig. 3. Instead the S-CSCF 125 just compares if the received message contains a profile key 421 with the wildcarded public identity 170 or not, which saves processing in the S-CSCF 125. If the received message does contain a profile key 421 with the wildcarded public identity 170, the S-CSCF 125 uses the wildcarded public identity 170 to fetch/download the user/service profile associated with the wildcarded public identity 170. If no stored user/service profile is found the S-CSCF 125 fetches the user/service profile associated with the wildcarded public identity 170, from the HSS 130.

In step 406 the HSS 130 uses the wildcarded public identity 170, received from the S-CSCF 125, to retrieve the user/service profile associated with the wildcarded public identity 170. Note that the public identity 171 shall be ignored by the HSS 130 if a wildcarded public identity 170 is received.

In step 410 the S-CSCF 125 uses the second public identity 172 received in the message to fetch/download the user/service profile associated with the second public identity 172. Note that the S-CSCF 125 does not perform wildcarded/reg exp matching, using the second public identity 172, as it did in step 310, Fig. 3. Instead the S-CSCF 125 just compares if the received message contains a profile key 421 with the wildcarded public identity 170 or not, which saves processing in the S-CSCF 125. If the received message does not contain a profile key 421 with the wildcarded public identity 170, the S-CSCF 125 uses the second public identity 172 to fetch/download the user/service profile associated with the second public identity 172. If no stored user/service profile is found the S-CSCF 125 fetches the user/service profile associated with the second public identity 172, from the HSS 130. Note that, since the S-CSCF 125 does not perform wildcarded/reg exp matching but relies on the information sent from the HSS 130, it does not matter that the S-CSCF 125 has no knowledge about the fact that the second public identity 172 is provisioned in the HSS 130.

In step 412 the HSS 130 uses the second public identity 172, received from the S-CSCF 125, to retrieve the user/service profile associated with the second public identity 172. Note that since a wildcarded public identity 170 is not received, the HSS 130 shall use the second public identity 172 to retrieve the user/service profile associated with the second public identity 172.

Consequently, when the first public identity 171 is not provisioned and the second public identity 172 (associated with the president) is provisioned, and both falls within the range of the provisioned wildcarded public identity 170, the user/service profile associated with the wildcarded public identity 170 will be applied for the first public identity 171 and the user/service profile associated with the second public identity 172 will be applied for second public identity 172, as described in Fig. 4. Thus a correct service profile will be applied for the second public identity 172, i.e. for the president.

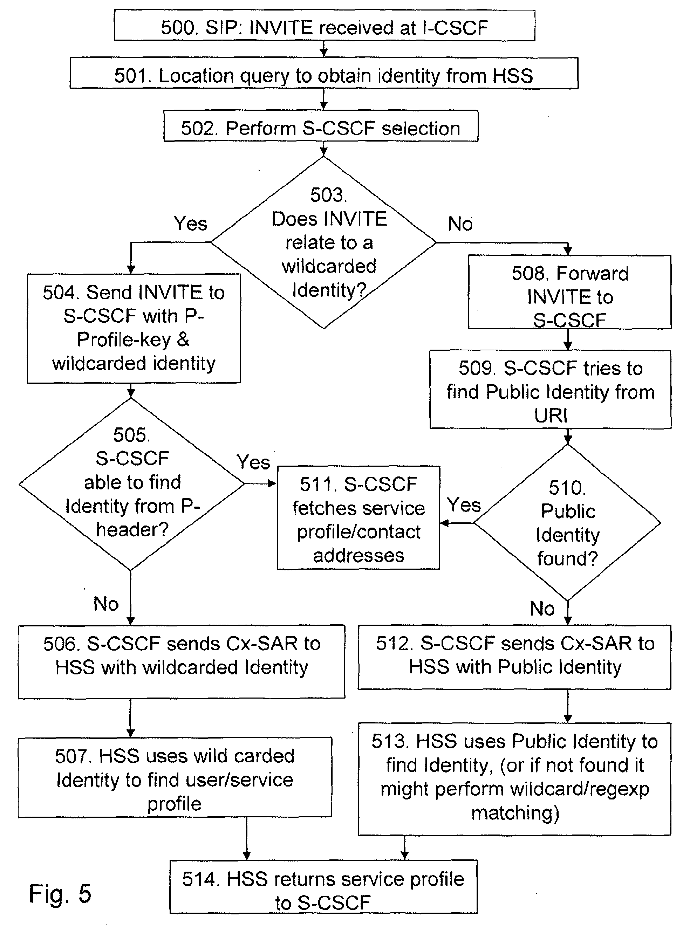

A flow chart schematically illustrating embodiments of the invention will now be described with reference to Figure 5. Reference will also be made to Fig. 4 in order to show how the steps of Fig. 4 correspond to the steps of Fig. 5.

Steps indicated by reference numerals 500-514 respectively in Fig. 5 are explained below.

500: A message including a public identity is received at the I-CSCF 120. This step corresponds both to step 401 in Fig. 4, and to step 407 in Fig.4, in which a request to a public identity is received.

501: The I-CSCF 120 sends a request message to the HSS 130, in order to obtain the name of the S-CSCF that is serving the public identity received in the message, which corresponds to steps 402 and 408 in Fig. 4.

502: The I-CSCF 120 receives a response message from the HSS 130, and then selects S-CSCF. This step corresponds both to steps 403 and 409 in Fig. 4.

503: The I-CSCF 120 determines whether the received response message relates to a wildcarded public identity 170 or not, based on whether it includes a wildcarded public identity 170 or not.

504: If the I-CSCF 120 determines that the received response message relates to a wild carded public identity 170, it forwards the message, received in step 500, to the S-CSCF 125. The I-CSCF 120 includes the profile key 421 with the wildcarded public identity 170. This step corresponds to step 404 in Fig 4.

505: The S-CSCF 125 uses the wildcarded public identity 170, received with the profile key 421, to fetch/download a stored user/service profile associated with the wildcarded public identity 170. This step corresponds to the first paragraph in step 405 in Fig 4. If a stored user/service profile associated with the wildcarded public identity 170 is found the S-CSCF 125 will go directly to step 511.

506: If a stored user/service profile associated with the wildcarded public identity 170 is not found the S-CSCF 125 will send a request message to the HSS 130, including the wildcarded public identity 170. This step corresponds to the second paragraph in step 405 in Fig 4.

507: The HSS 130 uses the received wildcarded public identity 170, to retrieve the user/service profile associated with the wildcarded public identity 170. The HSS 130 will then go to step 514, wherein the user/service profile associated with the wildcarded public identity 170 will be applied for the first public identity 171. These steps correspond to step 406 in Fig 4.

508: If the I-CSCF 120 determines that the received response message relates to a public identity 172, it forwards the message, received in step 500, to the S-CSCF 125. Note that the I-CSCF 120 does not include the profile key 421 with the wildcarded public identity 170. This step corresponds to the first paragraph in step 410 in Fig 4.

509: The S-CSCF 125 uses the public identity 172, received in the message, to fetch/download a stored user/service profile associated with the public identity 172. This step corresponds to the second paragraph in step 410 in Fig 4.

510: If a stored user/service profile associated with the public identity 172 is found the S-CSCF 125 will go directly to step 511.

511: The S-CSCF 125 fetches/downloads the stored user/service profile.

512: If a stored user/service profile associated with the public identity 172 is not found the S-CSCF 125 will send a request message to the HSS 130, including the public identity 172. This step corresponds to step 411 in Fig 4.

513: The HSS 130 uses the received public identity 172, to retrieve the user/service profile associated with the public identity 172. The HSS 130 will then go to step 514, wherein the user/service profile associated with the second public identity 172 will be applied for the second public identity 172. These steps correspond to step 412 in Fig 4.

Note that if the HSS 130 is not able to retrieve the user/service profile in question, then the HSS 130 may perform wildcarded/reg exp matching based on the second public identity 172. This is done for backward compatibility reasons if, for some reason the profile key 421 would not be supported by the I-CSCF 120.

An alternative solution if the HSS 130 is not able to retrieve the user/service profile in question, may be to inform the S-CSCF 125 that the user/service profile is not downloaded. A possible way may be that the HSS 130 sends the status "not registered", including the wildcarded identity, to the I-CSCF 120 (i.e. user/service profile not downloaded) and the I-CSCF 120 passes on this information to the S-CSCF 125 in step 502/409. The S-CSCF 125, upon receiving the information, may send a request to the HSS 130 for the profile for the wildcarded identity, and does not perform any wildcarded/reg exp matching.

This alternative has the further advantage that it optimises the signalling in other scenarios (e.g. detecting inconsistencies between the HSS and S-CSCF upon terminating requests for the user at S-CSCF failure).

514: The HSS 130 sends the user/service profile to the S-CSCF 125.

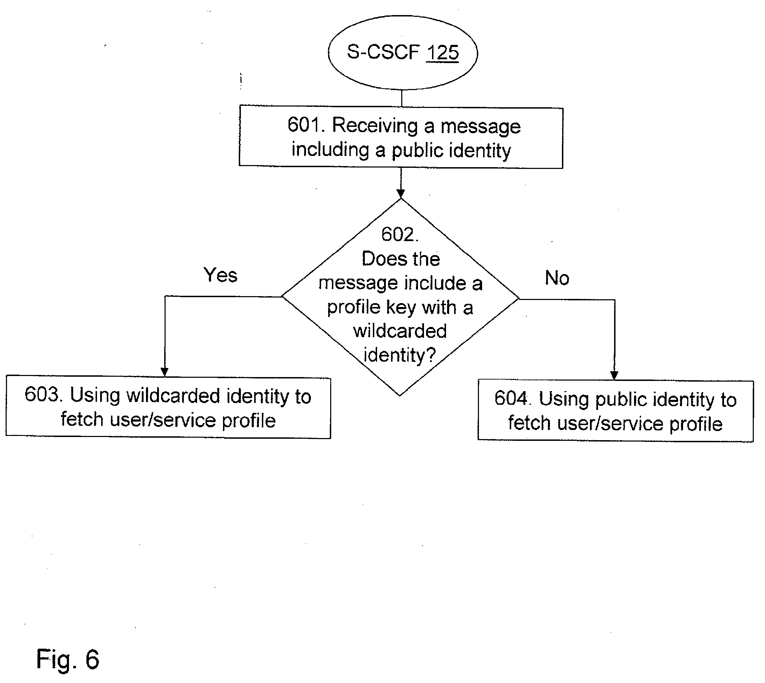

In order to be able to perform the steps of the embodiments described above the S-CSCF node 125 will need to be adapted for this purpose. The S-CSCF node 125 will be adapted to be able to execute a method according to the flow chart shown in Figure 6.

A flow chart schematically illustrating a method in the S-CSCF node 125, for handling public identities in an IMS network, in accordance with embodiments of the invention, will now be described with reference to Fig. 6.

Steps indicated by reference numerals 601-604 respectively in Fig. 6 are explained below.

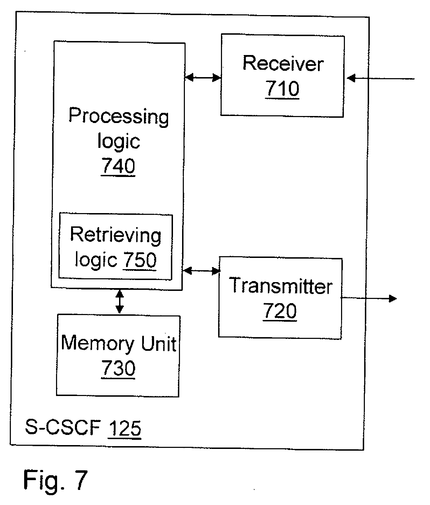

In a step 601, the S-CSCF node 125 receives a message including a public identity 171, 172, 173. The message is received from the I-CSCF node 120. Step 602 illustrates that the S-CSCF node 125 does a string comparison in order to find out whether or not the message includes a profile key 421 with a wildcarded public identity 170. If the message includes a profile key 421 with a wildcarded public identity 170, the S-CSCF 125 uses, in a step 603, the wildcarded public identity 170 received with the profile key 421 to fetch a user/service profile associated with the wildcarded public identity 170. If the message does not include a profile key 421 with a wildcarded public identity 170, the S-CSCF 125 uses, in a step 604, the public identity 172 received in the message to fetch the user/service profile associated with the public identity 172. Figure 7 is a block diagram of exemplary components of the S-CSCF node 125 adapted to execute the method described in connection with Fig. 6 above. As illustrated, the S-CSCF 125 comprises a receiver 710, a transmitter 720, processing logic 740, including retrieving logic 750 and a memory unit 730.

The receiver 710 may comprise circuitry that allows the S-CSCF 125 to communicate with other nodes. In particular, receiver 710 is configured to receive the message, according to step 601, discussed above.

The processing logic 740 may control the operation of the S-CSCF 125. In particular, the processing logic 740 is configured to, by the retrieving logic 750, fetch the user/service profile, according to steps 603 and 604 discussed above.

The retrieving logic 750 may further be configured to fetch the user/service profile stored in the memory unit 730, according to steps 505, 510 and 511.

The transmitter 720 may comprise circuitry that allows the S-CSCF 125 to communicate with other nodes. In particular, the transmitter 720 is configured to send the request to the HSS 130, according to steps 506 and 512, discussed above.

Although Fig. 7 shows exemplary components of the S-CSCF 125, in other implementations, the S-CSCF 125 may contain fewer, different, or additional components than those described above. In still other implementations, one or more components of the S-CSCF 125 may perform the tasks described as being performed by one or more other components of the S-CSCF 125.

An advantage with embodiments of the invention is that the wildcarded/reg exp matching is performed only by the HSS 130. The S-CSCF 125 does not need to perform wildcarded/reg exp matching to find the correct user/service profile, but simply a string comparison based on received information. This saves processing in the S-CSCF 125. Since the HSS 130 is aware of all distinct and wildcarded public identities, the information that the S-CSCF 125 receives is reliable. Note that in order to rely on the information provided by the HSS 130, it will be the operator's responsibility to provision all the overlapping distinct and wildcarded public identities in the same HSS 130.

A further advantage with embodiments of the invention is that the operator does not need to use different P-CSCFs to register distinct public identities and wildcarded public identities, which would be the case if it would be up to the operator to configure the IMS network properly to avoid this problem.

A further advantage with embodiments of the invention is that since the profile key 421 is made mandatory in cases where wildcarded public identities are to be applied, the profile key 421 can be trusted as a flag indicating if the received message is related to a wildcarded public identity or not.

An advantage with certain embodiments of the invention is that it ensures application of desired service profiles in scenarios where a public identity within the range of a wildcarded public identity is associated with a different user/service profile than the user/service profile associated with the wildcarded public identity. This is irrespective of whether or not the public identity is associated with the same or a different IRS than the wildcarded public identity, provided that the public identity and wildcarded public identity are under the same subscription. This increases the flexibility of the functionality of wildcarded public identities.

In the drawings and specification, there have been disclosed typical preferred embodiments of the invention and, although specific terms are employed, they are used in a generic and descriptive sense only and not for purposes of limitation, the scope of the invention being set forth in the following claims.

## Claims

1. A method in a Serving Call Session Control Function, S-CSCF, node (125) for handling public identities (171, 172, 173) in an Internet Protocol Multimedia Subsystem, IMS, network (100), on a terminating side of a call, the method comprising:
receiving (601), from an Interrogating Call Session Control Function, I-CSCF, node (120), a message including a public identity (171, 172, 173), wherein the public identity (171, 172, 173) received in the message falls into a range of a wildcarded public identity (170), but is associated with a first user/service profile different from a second user/service profile associated with the wildcarded public identity (170);
checking (602) if the received message includes a profile key (421) with the wildcarded public identity (170);
if the message includes a profile key (421) with the wildcarded public identity (170),
using (603) the wildcarded public identity (170) received with the profile key (421) to fetch the second user/service profile associated with the wildcarded public identity (170);
if the message does not include a profile key (421) with the wildcarded public identity (170),
using (604) the public identity (172) received in the message to fetch the first user/service profile associated with the public identity (172).

2. The method according to claim 1, wherein the step of using (603) the wildcarded public identity (170) received with the profile key (421) to fetch the user/service profile associated with the wildcarded public identity (170) includes
using (603) the wildcarded public identity (170) received with the profile key (421) to try to find the user/service profile associated with the wildcarded public identity (170) stored in the S-CSCF node (125);
if the user/service profile associated with the wildcarded public identity (170) is found in the S-CSCF node (125),
fetching the stored user/service profile associated with the wildcarded public identity (170);
if the user/service profile associated with the wildcarded public identity (170) is not found in the S-CSCF node (125),
sending a first request including the wildcarded public identity (170) to a Home Subscriber Server, HSS, node (130) to fetch the user/service profile associated with the wildcarded public identity (170) from the HSS node (130).

3. The method according to claim 2, wherein the first request is a Server Assignment Request, SAR, message including a wildcarded public identity Attribute Value Pair, AVP (422).

4. The method according to any of claims 1-3, wherein the step of using (604) the public identity (172) received in the message to fetch the user/service profile associated with the public identity (172) includes
using (604) the public identity (172) received in the message to try to find the user/service profile associated with the public identity (172) stored in the S-CSCF node (125);
if the user/service profile associated with the public identity (172) is found in the S-CSCF node (125),
fetching the stored user/service profile associated with the public identity (172);
if the user/service profile associated with the public identity (172) is not found in the S-CSCF node (125),
sending a second request including the public identity (172) to a Home Subscriber Server, HSS, node (130) to fetch the user/service profile associated with the public identity (172) from the HSS node (130).

5. The method according to claims 4, wherein the second request is a Server Assignment Request, SAR, message including a public identity Attribute Value Pair, AVP (423).

6. The method according to any of the preceding claims, wherein the public identity is a public service identity, PSI, or a public user identity, IMPU.

7. The method according to any of the preceding claims, wherein the profile key (421) is a P-Profile-Key.

8. The method according to any of the preceding claims, wherein the received message is a request message related to a call destined for the public identity (171, 172, 173).

9. The method according to any of the preceding claimsclaim 9, wherein the public identity (172) is associated with a first Implicit Registration Set, IRS (160), different from a second IRS (165) associated with the wildcarded identity (170).

10. A Serving Call Session Control Function, S-CSCF, node (125) for handling public identities (171, 172, 173) in an Internet Protocol Multimedia Subsystem, IMS, network (100), on a terminating side of a call, wherein the S-CSCF node (125) is configured to:
receive (601), from an Interrogating Call Session Control Function, I-CSCF, node (120), a message including a public identity (171, 172, 173), wherein the public identity (171, 172, 173) received in the message falls into a range of a wildcarded public identity (170), but is associated with a first user/service profile different from a second user/service profile associated with the wildcarded public identity (170);
check (602) if the received message includes a profile key (421) with the wildcarded public identity (170);
if the message includes a profile key (421) with the wildcarded public identity (170),
use (603) the wildcarded public identity (170) received with the profile key (421) to fetch the second user/service profile associated with the wildcarded public identity (170);
if the message does not include a profile key (421) with the wildcarded public identity (170),
use (604) the public identity (172) received in the message to fetch the first user/service profile associated with the public identity (172).

11. The S-CSCF node (125) according to claim 10, wherein the S-CSCF node (125) comprises a receiver (710), a transmitter (720), a memory unit (730) and processing logic (740), the processing logic (740) being connected to the receiver (710), to the transmitter (720) and to the memory unit (730), wherein
the receiver (710) is configured to receive the message;
the processing logic is configured to check if the received message includes a profile key with the wildcarded public identity; and
the processing logic (740) comprises retrieving logic (750) configured to fetch the user/service profile.

12. The S-CSCF node (125) according to claim 11, wherein the retrieving logic (750) is configured to use (603) the wildcarded public identity (170) to fetch the user/service profile associated with the wildcarded public identity (170) by
fetching the user/service profile associated with the wildcarded public identity (170) from the memory unit (730), if the user/service profile associated with the wildcarded public identity (170) is found in the memory unit (730); and by
initiating the transmitter (720) to send a first request including the wildcarded public identity (170) to a Home Subscriber Server, HSS node (130) to fetch the user/service profile associated with the wildcarded public identity (170) from the HSS node (130), if the user/service profile associated with the wildcarded public identity (170) is not found in the memory unit (730) of the S-CSCF node (125).

13. The S-CSCF node (125) according to claim 12, wherein the transmitter (720) is further configured to send the first request as a Server Assignment Request, SAR, message including a wildcarded public identity Attribute Value Pair, AVP (422).

14. The S-CSCF node (125) according to any of claims 12-13, wherein the retrieving logic (750) is further configured to use (604) the public identity (172) received in the message to fetch the user/service profile associated with the public identity (172) by
fetching the user/service profile associated with the public identity (172) from the memory unit (730), if the user/service profile associated with the public identity (172) is found in the memory unit (730), and by
initiating the transmitter (720) to send a second request including the public identity (172) to a Home Subscriber Server, HSS node (130) to fetch the user/service profile associated with the public identity (172) from the HSS node (130), if the user/service profile associated with the public identity (172) is not found in the memory unit (730) of S-CSCF node (125),

15. The S-CSCF node (125) according to claim 14, wherein the transmitter (720) is further configured to send the second request as a Server Assignment Request, SAR, message including a public identity Attribute Value Pair, AVP (423).

## Patentansprüche

1. Verfahren in einem Serving Call Session Control Function, S-CSCF, Knoten (125) zum Handhaben öffentlicher Identitäten (171, 172, 173) in einem Internetprotokoll Multimedia Subsystem, IMS, Netzwerk (100) an einer Terminierungsseite eines Anrufs, wobei das Verfahren umfasst:
Empfangen (601), von einem Interrogating Call Session Control Function, I-CSCF, Knoten (120) einer Nachricht, die eine öffentliche Identität (171, 172, 173) enthält, wobei die öffentliche Identität (171, 172, 173), die in der Nachricht empfangen wird, in einen Bereich einer mit Wildcard versehenen öffentlichen Identität (170) fällt, aber mit einem ersten Benutzer-/Dienstprofil verknüpft ist, das sich von einem zweiten Benutzer-/Dienstprofil unterscheidet, das mit der mit Wildcard versehenen öffentlichen Identität (170) verknüpft ist;
Prüfen (602), ob die empfangene Nachricht einen Profilschlüssel (421) mit der mit Wildcard versehenen öffentlichen Identität (170) enthält;
wenn die Nachricht einen Profilschlüssel (421) mit der mit Wildcard versehenen öffentlichen Identität (170) enthält,
Verwenden (603) der mit Wildcard versehenen öffentlichen Identität (170), die mit dem Profilschlüssel (421) empfangen wird, um das zweite Benutzer-/Dienstprofil abzurufen, das mit der mit Wildcard versehenen öffentlichen Identität (170) verknüpft ist;
wenn die Nachricht keinen Profilschlüssel (421) mit der mit Wildcard versehenen öffentlichen Identität (170) enthält,
Verwenden (604) der öffentlichen Identität (172), die in der Nachricht empfangen wird, zum Abrufen des ersten Benutzer-/Dienstprofils, das mit der öffentlichen Identität (172) verknüpft ist.

2. Verfahren nach Anspruch 1, wobei der Schritt zum Verwenden (603) der mit Wildcard versehenen öffentlichen Identität (170), die mit dem Profilschlüssel (421) empfangen wird, um das Benutzer-/Dienstprofil abzurufen, das mit der mit Wildcard versehenen öffentlichen Identität (170) verknüpft ist, enthält
Verwenden (603) der mit Wildcard versehenen öffentlichen Identität (170), die mit dem Profilschlüssel (421) empfangen wird, in dem Versuch, das Benutzer-/Dienstprofil zu finden, das mit der mit Wildcard versehenen öffentlichen Identität (170) verknüpft ist, das im S-CSCF Knoten (125) gespeichert ist;
wenn das Benutzer-/Dienstprofil, das mit der mit Wildcard versehenen öffentlichen Identität (170) verknüpft ist, im S-CSCF Knoten (125) gefunden wird,
Abrufen des gespeicherten Benutzer-/Dienstprofils, das mit der mit Wildcard versehenen öffentlichen Identität (170) verknüpft ist;
wenn das Benutzer-/Dienstprofil, das mit der mit Wildcard versehenen öffentlichen Identität (170) verknüpft ist, nicht im S-CSCF Knoten (125) gefunden wird,
Senden einer ersten Anfrage, die die mit Wildcard versehene öffentliche Identität (170) enthält, zu einem Home Subscriber Server, HSS, Knoten (130), um das Benutzer-/Dienstprofil, das mit der mit Wildcard versehenen öffentlichen Identität (170) verknüpft ist, vom HSS Knoten (130) abzurufen.

3. Verfahren nach Anspruch 2, wobei die erste Anfrage eine Server-Zuweisungsanfrage-, SZA, Nachricht ist, die ein Attributwertpaar, AWP (422) für die mit Wildcard versehene öffentliche Identität enthält.

4. Verfahren nach einem der Ansprüche 1-3, wobei der Schritt zum Verwenden (604) der öffentlichen Identität (172), die in der Nachricht empfangen wird, zum Abrufen des Benutzer-/Dienstprofils, das mit der öffentlichen Identität (172) verknüpft ist, enthält
Verwenden (604) der öffentlichen Identität (172), die in der Nachricht empfangen wird, in dem Versuch, das Benutzer-/Dienstprofil zu finden, das mit der öffentlichen Identität (172) verknüpft ist, das im S-CSCF Knoten (125) gespeichert ist;
wenn das Benutzer-/Dienstprofil, das mit der öffentlichen Identität (172) verknüpft ist, im S-CSCF Knoten (125) gefunden wird,
Abrufen des gespeicherten Benutzer-/Dienstprofils, das mit der öffentlichen Identität (172) verknüpft ist;
wenn das Benutzer-/Dienstprofil, das mit der öffentlichen Identität (172) verknüpft ist, nicht im S-CSCF Knoten (125) gefunden wird,
Senden einer zweiten Anfrage, die die öffentliche Identität (172) enthält, an einen Home Subscriber Server, HSS, Knoten (130), um das Benutzer-/Dienstprofil das mit der öffentlichen Identität (172) verknüpft ist, vom HSS Knoten (130) abzurufen.

5. Verfahren nach Anspruch 4, wobei die zweite Anfrage eine Server-Zuweisungsanfrage-, SZA, Nachricht ist, die ein Attributwertpaar, AWP (423) für die öffentliche Identität enthält.

6. Verfahren nach einem der vorangehenden Ansprüche, wobei die öffentliche Identität eine Identität eines öffentlichen Dienstes, PSI, oder eine Identität eines öffentlichen Benutzers, IMPU, ist.

7. Verfahren nach einem der vorangehenden Ansprüche, wobei der Profilschlüssel (421) ein P-Profilschlüssel ist.

8. Verfahren nach einem der vorangehenden Ansprüche, wobei die empfangene Nachricht eine Anfragenachricht ist, die mit einem Anruf zusammenhängt, der für die öffentliche Identität (171, 172, 173) bestimmt ist.

9. Verfahren nach einem der vorangehenden AnsprücheAnspruch9, wobei die öffentliche Identität (172) mit einem ersten impliziten Registrierungssatz, IRS (160) verknüpft ist, der sich von einem zweiten IRS (165) unterscheidet, der mit der mit Wildcard versehenen Identität (170) verknüpft ist.

10. Serving Call Session Control Function, S-CSCF, Knoten (125) zum Handhaben öffentlicher Identitäten (171, 172, 173) in einem Internetprotokoll Multimedia Subsystem, IMS, Netzwerk (100) an einer Terminierungsseite eines Anrufs, wobei der S-CSCF Knoten (25) konfiguriert ist zum:
Empfangen (601), von einem Interrogating Call Session Control Function, I-CSCF, Knoten (120) einer Nachricht, die eine öffentliche Identität (171, 172, 173) enthält, wobei die öffentliche Identität (171, 172, 173), die in der Nachricht empfangen wird, in einen Bereich einer mit Wildcard versehenen öffentlichen Identität (170) fällt, aber mit einem ersten Benutzer-/Dienstprofil verknüpft ist, das sich von einem zweiten Benutzer-/Dienstprofil unterscheidet, das mit der mit Wildcard versehenen öffentlichen Identität (170) verknüpft ist;
Prüfen (602), ob die empfangene Nachricht einen Profilschlüssel (421) mit der mit Wildcard versehenen öffentlichen Identität (170) enthält;
wenn die Nachricht einen Profilschlüssel (421) mit der mit Wildcard versehenen öffentlichen Identität (170) enthält,
Verwenden (603) der mit Wildcard versehenen öffentlichen Identität (170), die mit dem Profilschlüssel (421) empfangen wird, um das zweite Benutzer-/Dienstprofil abzurufen, das mit der mit Wildcard versehenen öffentlichen Identität (170) verknüpft ist;
wenn die Nachricht keinen Profilschlüssel (421) mit der mit Wildcard versehenen öffentlichen Identität (170) enthält,
Verwenden (604) der öffentlichen Identität (172), die in der Nachricht empfangen wird, zum Abrufen des ersten Benutzer-/Dienstprofils, das mit der öffentlichen Identität (172) verknüpft ist.

11. S-CSCF Knoten (125) nach Anspruch 10, wobei der S-CSCF Knoten (125) einen Empfänger (710), einen Sender (720), eine Speichereinheit (730) und Verarbeitungslogik (740) umfasst, wobei die Verarbeitungslogik (740) an den Empfänger (710), an den Sender (720) und an die Speichereinheit (730) angeschlossen ist, wobei
der Empfänger (710) zum Empfangen der Nachricht konfiguriert ist; und
die Verarbeitungslogik konfiguriert ist zu prüfen, ob die empfangene Nachricht einen Profilschlüssel mit der mit Wildcard versehenen öffentlichen Identität enthält; und
die Verarbeitungslogik (740) eine Abfragelogik (750) umfasst, die zum Abrufen des Benutzer-/Dienstprofils konfiguriert ist.

12. S-CSCF Knoten (125) nach Anspruch 11, wobei die Abfragelogik (750) zur Verwendung (603) der mit Wildcard versehenen öffentlichen Identität (170) konfiguriert ist, um das Benutzer-/Dienstprofil, das mit der mit Wildcard versehenen öffentlichen Identität (170) verknüpft ist, abzurufen durch
Abrufen des Benutzer-/Dienstprofils, das mit der mit Wildcard versehenen öffentlichen Identität (170) verknüpft ist, aus der Speichereinheit (730), wenn das Benutzer-/Dienstprofil, das mit der mit Wildcard versehenen öffentlichen Identität (170) verknüpft ist, in der Speichereinheit (730) gefunden wird; und durch
Initiieren des Senders (720), eine erste Anfrage, die die mit Wildcard versehene öffentliche Identität (170) enthält, zu einem Home Subscriber Server, HSS Knoten (130) zu senden, um das Benutzer-/Dienstprofil, das mit der mit Wildcard versehenen öffentlichen Identität (170) verknüpft ist, vom HSS Knoten (130) abzurufen, wenn das Benutzer-/Dienstprofil, das mit der mit Wildcard versehenen öffentlichen Identität (170) verknüpft ist, nicht in der Speichereinheit (730) des S-CSCF Knotens (125) gefunden wird.

13. S-CSCF Knoten (125) nach Anspruch 12, wobei der Sender (720) ferner konfiguriert ist, die erste Anfrage als eine Server-Zuweisungsanfrage-, SZA, Nachricht zu senden, die ein Attributwertpaar, AWP (422) für die mit Wildcard versehene öffentliche Identität enthält.

14. S-CSCF Knoten (125) nach einem der Ansprüche 12-13, wobei die Abfragelogik (750) ferner konfiguriert ist zum Verwenden (604) der öffentlichen Identität (172), die in der Nachricht empfangen wird, zum Abrufen des ersten Benutzer-/Dienstprofils, das mit der öffentlichen Identität (172) verknüpft ist, durch
Abrufen des Benutzer-/Dienstprofils, das mit der öffentlichen Identität (172) verknüpft ist, aus der Speichereinheit (730), wenn das Benutzer-/Dienstprofil, das mit der öffentlichen Identität (172) verknüpft ist, in der Speichereinheit (730) gefunden wird; und durch
Initiieren des Senders (720), eine zweite Anfrage, die die öffentliche Identität (172) enthält, zu einem Home Subscriber Server, HSS Knoten (130) zu senden, um das Benutzer-/Dienstprofil, das mit der öffentlichen Identität (172) verknüpft ist, vom HSS Knoten (130) abzurufen, wenn das Benutzer-/Dienstprofil, das mit der öffentlichen Identität (172) verknüpft ist, nicht in der Speichereinheit (730) des S-CSCF Knotens (125) gefunden wird.

15. S-CSCF Knoten (125) nach Anspruch 14, wobei der Sender (720) ferner konfiguriert ist, die zweite Anfrage als eine Server-Zuweisungsanfrage-, SZA, Nachricht, die ein Attributwertpaar, AWP (423) für eine öffentliche Identität enthält, zu senden.

## Revendications

1. Procédé dans un noeud (125) de fonction de commande de séance d'appel de desserte S-CSCF pour manipuler des identités publiques (171, 172, 173) dans un réseau (100) de sous-système multimédia à protocole Internet IMS sur un côté de terminaison d'un appel, le procédé comprenant les étapes consistant à :
recevoir (601) d'un noeud (120) de fonction de commande de séance d'appel d'interrogation I-CSCF un message comprenant une identité publique (171, 172, 173), dans lequel l'identité publique (171, 172, 173) reçue dans le message tombe dans une plage d'une identité publique générique (170), mais est associée à un premier profil d'utilisateur/service différent d'un second profil d'utilisateur/service associé à l'identité publique générique (170) ;
contrôler (602) si le message reçu comprend un code de profil (421) avec l'identité publique générique (170) ;
si le message comprend un code de profil (421) avec l'identité publique générique (170), utiliser (603) l'identité publique générique (170) reçue avec le code de profil (421) pour rechercher le second profil d'utilisateur/service associé à l'identité publique générique (170) ;
si le message ne comprend pas un code de profil (421) avec l'identité publique générique (170), utiliser (604) l'identité publique (172) reçue dans le message pour rechercher le premier profil d'utilisateur/service associé à l'identité publique (172).

2. Procédé selon la revendication 1, dans lequel l'étape d'utilisation (603) de l'identité publique générique (170) reçue avec le code de profil (421) pour rechercher le profil d'utilisateur/service associé à l'identité publique générique (170) comprend les étapes consistant à :
utiliser (603) l'identité publique générique (170) reçue avec le code de profil (421) pour tenter de trouver le profil d'utilisateur/service associé à l'identité publique générique (170) stockée dans le noeud S-CSCF (125) ;
si le profil d'utilisateur/service associé à l'identité publique générique (170) est trouvé dans le noeud S-CSCF (125),
extraire le profil d'utilisateur/service stocké avec l'identité publique générique (170) ;
si le profil d'utilisateur/service associé à l'identité publique générique (170) n'est pas trouvé dans le noeud S-CSCF (125),
envoyer une première demande comprenant l'identité publique générique (170) à un noeud (130) serveur d'abonnés domestiques HSS pour extraire le profil d'utilisateur/service associé à l'identité publique générique (170) du noeud HSS (130).

3. Procédé selon la revendication 2, dans lequel la première demande est un message de demande d'affectation de serveur SAR comprenant une paire de valeurs d'attribut AVP (422) de l'identité publique générique.

4. Procédé selon l'une quelconque des revendications 1 à 3, dans lequel l'étape d'utilisation (604) de l'identité publique (172) reçue dans le message pour extraire le profil d'utilisateur/service associé à l'identité publique (172) comprend les étapes consistant à :
utiliser (604) l'identité publique (172) reçue dans le message pour tenter de trouver le profil d'utilisateur/service associé à l'identité publique (172) stockée dans le noeud S-CSCF (125) ;
si le profil d'utilisateur/service associé à l'identité publique (172) est trouvé dans le noeud S-CSCF (125), extraire le profil d'utilisateur/- service stocké associé à l'identité publique (172) ;
si le profil d'utilisateur/service associé à l'identité publique (172) n'est pas trouvée dans le noeud S-CSCF (125),
envoyer une seconde demande comprenant l'identité publique (172) à un noeud (130) de serveur d'abonnés domestiques HSS pour extraire le profil d'utilisateur/service associé à l'identité publique (172) du noeud HSS (130).

5. Procédé selon la revendication 4, dans lequel la seconde demande est un message de demande d'affectation de serveur SAR comprenant une paire de valeurs d'attribut AVP (423) de l'identité publique.

6. Procédé selon l'une quelconque des revendications précédentes, dans lequel l'identité publique est une identité de service publique PSI ou une identité d'utilisateur public IMPU.

7. Procédé selon l'une quelconque des revendications précédentes, dans lequel le code de profil (421) est un code de profil P.

8. Procédé selon l'une quelconque des revendications précédentes, dans lequel le message reçu est un message de demande se rapportant à un appel destiné à l'identité publique (171, 172, 173).

9. Procédé selon l'une quelconque des revendications précédentesrevendication 9, dans lequel l'identité publique (172) est associée à un premier ensemble d'enregistrement implicite IRS (160) différent d'un second IRS (165) associé à l'identité générique (170).

10. Noeud (125) de fonction de commande de séance d'appel de desserte S-CSCF pour manipuler des identités publiques (171, 172, 173) dans un réseau (100) de sous-système multimédia à protocole Internet IMS sur un côté de terminaison d'un appel, dans lequel le noeud S-CSCF est configuré pour :
recevoir (601) d'un noeud (120) de fonction de commande de séance d'appel d'interrogation I-CSCF un message comprenant une identité publique (171, 172, 173), dans lequel l'identité publique (171, 172, 173) reçue dans le message tombe dans une plage d'une identité publique générique (170), mais est associée à un premier profil d'utilisateur/service différent d'un second profil d'utilisateur/service associé à l'identité publique générique (170) ;
contrôler (602) si le message reçu comprend un code de profil (421) avec l'identité publique générique (170) ;
si le message comprend un code de profil (421) avec l'identité publique générique (170),
utiliser (603) l'identité publique générique (170) reçue avec la clé de profil (421) pour extraire le second profil d'utilisateur/service associé à l'identité publique générique (170) ;
si le message ne comprend pas un code de profil (421) avec l'identité publique générique (170),
utiliser (604) l'identité publique (172) reçue dans le message pour extraire le premier profil d'utilisateur/service associé à l'identité publique (172).

11. Noeud S-CSCF (125) selon la revendication 10, dans lequel le noeud S-CSCF (125) comprend un récepteur (710), un émetteur (720), une unité de mémoire (730) et un circuit logique de traitement (740), le circuit logique de traitement (740) étant connecté au récepteur (710), à l'émetteur (720) et à l'unité de mémoire (730), dans lequel :
le récepteur (710) est configuré pour recevoir le message ;
le circuit logique de traitement est configuré pour vérifier si le message reçu comprend un code de profil avec l'identité publique générique ; et
le circuit logique de traitement (740) comprend un circuit logique de récupération (750) configuré pour rechercher le profil d'utilisateur/service.

12. Noeud S-CSCF (125) selon la revendication 11, dans lequel le circuit logique de récupération (750) est configuré pour utiliser (603) l'identité publique générique (170) pour extraire le profil d'utilisateur/service associé à l'identité publique générique (170) comme suit :
en recherchant le profil d'utilisateur/service associé à l'identité publique générique (170) dans l'unité de mémoire (30) si le profil d'utilisateur/service associé à l'identité publique générique (170) est trouvé dans l'unité de mémoire (730) ; et
en initiant l'émetteur (720) pour envoyer une première demande comprenant l'identité publique générique (170) à un noeud (130) de serveur d'abonnés domestiques HSS pour extraire le profil d'utilisateur/service associé à l'identité publique générique (170) du noeud HSS (130) si le profil d'utilisateur/service associé à l'identité publique générique (170) n'est pas trouvé dans l'unité de mémoire (730) du noeud S-CSCF (125).

13. Noeud S-CSCF (125) selon la revendication 12, dans lequel l'émetteur (720) est en outre configuré pour envoyer la première demande sous la forme d'un message de demande d'affectation de serveur SAR comprenant une paire de valeurs d'attribut AVP (422) de l'identité publique générique.

14. Noeud S-CSCF (125) selon l'une quelconque des revendications 12 à 13, dans lequel le circuit logique de récupération (750) est en outre configuré pour utiliser (604) l'identité publique (172) reçue dans le message pour extraire le profil d'utilisateur/service associé à l'identité publique (172) comme suit :
en recherchant le profil d'utilisateur/service associé à l'identité publique (172) auprès de l'unité de mémoire (730) si le profil d'utilisateur/service associé à l'identité publique (172) est trouvé dans l'unité de mémoire (730) et
en initiant l'émetteur (720) pour envoyer une seconde demande comprenant l'identité publique (172) à un noeud (130) de serveur d'abonnés domestiques HSS pour extraire le profil d'utilisateur/service associé à l'identité publique (172) du noeud HSS (130) si le profil d'utilisateur/service associé à l'identité publique (172) n'est pas trouvé dans l'unité de mémoire (730) du noeud S-CSCF (125).

15. Noeud S-CSCF (125) selon la revendication 14, dans lequel l'émetteur (720) est en outre configuré pour envoyer la seconde demande sous la forme d'un message de demande d'affectation de serveur SAR comprenant une paire de valeurs d'attribut AVP (423) de l'identité publique.
